# EUROPEAN PATENT APPLICATION

(11) **EP 2 495 707 A2**
(43) Date of publication of application: **05.09.2012**
(21) Application number: 12157295.2
(22) Date of filing: 28.02.2012
(51) Int. Cl.: G07F 15/12

(54) **Utility meter for paying a utility bill**

(30) Priority: 02.03.2011 US 201113038933
(71) Applicant: General Electric Company, Schenectady, NY 12345 (US)
(72) Inventor: Veerubhotla, Sitamahalakshimi, 500081 Hyderabad (IN)
(74) Representative: Picker, Madeline Margaret

(57) **Abstract**

Systems (100) and methods (400) allowing bill payment processing to be initiated from a utility meter (105) are provided. An example system may include a utility meter (105) for paying a utility bill that is operable to: measure utility usage; output data associated with the utility usage; receive user instructions to issue utility bill payment instructions associated with the measured utility usage over the communications network; authenticate the user according to the user authentication information; and transmit the utility bill payment instructions and the payment information over the communications network for processing.

## Description

### TECHNICAL FIELD

The invention relates generally to utility meters, and more particularly relates to systems and methods for processing bill payments using a utility meter.

### BACKGROUND OF THE INVENTION

The use of utilities is an integral part of the lives of most individuals. That is, at most residences and businesses, utilities such as gas, water, and electricity are utilized or consumed. Each residence (or household) and business generally pays monthly bills for consumed utilities. In some instances, a utility bill is typically generated by a utility provider after a "meter reader" manually records a utility reading from a meter located at a residence or a business. In other cases, a utility bill may be generated after an electronic meter reader provides a meter reading to the utility provider. For example, such electronic meter readings are typically transmitted to a receiving device that is carried by a meter reader who passes in proximity to meters on predetermined billing dates. The meter reader then returns the receiving device to the utility provider where readings received by the receiving device from electronic meter readings are processed.

Once a utility provider obtains a meter reading, the utility provider typically generates a bill for the corresponding utility consumption, and sends the bill to the customer. Upon receipt of the bill, the customer then generally sends or delivers payment (e.g., check, credit card, money order, cash, etc.) to the utility provider in order to pay the bill. In some cases, the customer may access a web-based bill payment system and enter payment information electronically in lieu of mailing the payment. The utility provider is then responsible for completing the payment processes, which includes clearance of the payment instrument and settlement between financial institutions.

Accordingly, for both a utility provider and its customers, monthly bill generation and payment may provide inconveniences and incur significant costs.

Accordingly, there exists a need for systems and methods for processing bill payments using a utility meter.

### BRIEF DESCRIPTION OF THE INVENTION

Embodiments of the invention can address some or all of the needs described above. According to one aspect, a utility meter for paying a utility bill is provided. The utility meter can include: a utility usage reading and payment module; memory operable to store payment information, user authentication information, and computer-executable instructions; and a processor in communication with the utility usage reading and payment module, the memory, and a communications network. The processor may be operable to: measure utility usage; output data associated with the utility usage; receive user instructions to issue utility bill payment instructions associated with the measured utility usage over the communications network; authenticate the user according to the user authentication information; and transmit the utility bill payment instructions and the payment information over the communications network for processing.

According to another aspect, a method for paying a utility bill from a utility meter is provided. The method may include: measuring utility usage; outputting data associated with the utility usage; receiving, by a utility meter, user instructions to issue utility bill payment instructions associated with the measured utility usage over a communications network; authenticating the user's identity according to the user authentication information; and upon authenticating the user's identity, transmitting the utility bill payment instructions from the utility meter over the communications network for processing.

According to yet another aspect, a method for processing utility bill payment instructions received from a utility meter can be provided. The method may include: receiving utility bill payment instructions over a communications network from a utility meter in response to a user issuing instructions to the utility meter, wherein the utility meter has authenticated an identity of the user associated therewith; determining a payment amount associated with the utility bill payment instructions; issuing respective debit and credit messages for transmission over a financial network to credit a financial account associated with a utility provider providing utility service to the utility meter and to debit a financial account associated with the utility bill payment instructions; and posting payment information to a utility account associated with the utility bill payment instructions.

Other embodiments and aspects of the invention will become apparent from the following description taken in conjunction with the following drawings.

### BRIEF DESCRIPTION OF THE DRAWINGS

FIG. 1 is a block diagram representation of an example system allowing for bill payments using a utility meter, according to an embodiment of the invention.
FIG. 2 is a block diagram illustrating an example utility meter system, according to an embodiment of the invention.
FIG. 3 is a block diagram illustrating an example computer system, according to an embodiment of the invention.
FIG. 4 is a flowchart illustrating an example method for paying a utility bill, according to an embodiment of the invention.

### DETAILED DESCRIPTION OF EMBODIMENTS OF THE INVENTION

Example embodiments of the invention now will be described more fully hereinafter with reference to the accompanying drawings, in which some, but not all embodiments are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

According to various example embodiments of the invention, certain systems and methods can provide the ability to pay utility bills using a utility meter located at or near a customer's site (e.g., home, business, etc.). For example, a utility meter can be in communication with the corresponding utility provider over a network, permitting communications therebetween. The utility meter may include a utility usage reading and payment module configured to measure utility usage and facilitate displaying usage data and receiving payment instructions through a user input interface of the utility meter. According to some examples, the utility meter may further include memory that enables storing utility usage and payment information (e.g., usage history, utility costs, payment information, payment history, user authentication data, etc.). Upon receiving user instructions to pay a bill, and authenticating the user, the utility meter may be operable to transmit utility usage and bill payment instructions over the network to a utility bill payment system for processing.

Upon receipt of the bill payment instructions, a utility bill payment system can be operable to extract the needed utility usage and bill payment information to process and complete the bill payment. For example, as part of completing the bill payment, the utility bill payment system may be in operable communication with a financial network that enables issuing and processing debit and credit transactions with respective financial institutions. In addition, the utility bill payment system may further be operable to post payment information to the user's utility account and transmit payment status information over the network back to the user's meter.

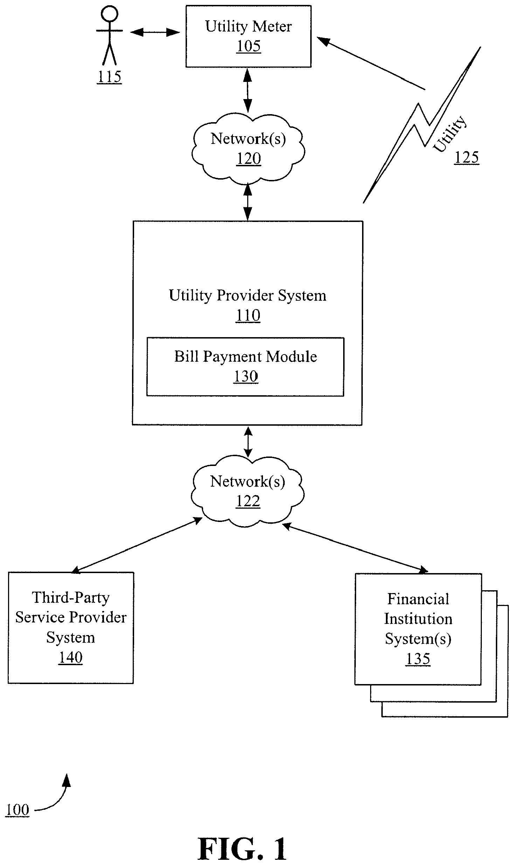

Example embodiments are now described with reference to FIGS. 1-4.

Referring to the drawings, FIG. 1 is a block diagram representation of an example system allowing for bill payments using a utility meter, according to one embodiment of the invention. According to this embodiment, at each customer site associated with a customer 115, at least one utility meter 105 for monitoring and facilitating payment of the utility (or utilities) 125 provided to the customer site is provided. The utility meter 105 may be in communication with a utility provider system 110, which is associated with the utility provider providing the utility 125, over a network 120. Example utilities 125 to which the embodiments provided herein relate to may include, but are not limited to: electricity, power, gas, water, sewage, communications, media, or any other service for which usage can be monitored and payment is to be made to the service provider. The utility provider system 110 may further be in communication with one or more financial institutions over one or more networks 122 and optionally one or more third-party service provider systems 140 over one or more networks 122.

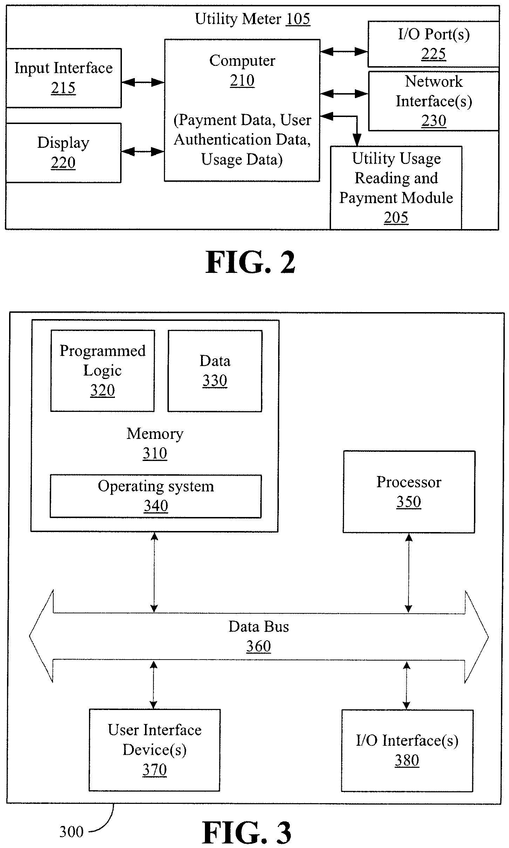

With reference to the utility meter 105, FIG. 2 illustrates block diagram of an example embodiment of a utility meter 105 configured as a smart meter, which is operable to monitor utility usage and to facilitate bill payment over a network with the utility provider system 110. The utility meter 105 includes a utility usage reading and payment module 205 that is configured to read or otherwise obtain levels of utility usage, which may be a mechanical and/or electrical metering device operable to monitor, read, and store meter counts associated with utility usage, which may be provided or otherwise stored according to any number of units of measurement (e.g., kilowatt hours, gallons, BTUs, therms, CCFs, hours, kilobytes, etc.).

The utility meter 105 may further include a processor-based computer 210, which may be any processor-driven device, such as may include one or more microprocessors and memories or other computer-readable media operable for storing and executing computer-executable instructions. By executing computer-executable instructions, the utility meter 105 may form a special purpose computer or a particular machine. As used herein, the term "computer-readable medium" may describe any form of computer memory or memory device, such as, but not limited to, a random access memory ("RAM") or a non-volatile memory, such as a hard disk, an EPROM, or an EEPROM.

More specifically, the computer 210 of the utility meter 105 is operable to execute the utility usage reading and payment module 205, which together serve as the computational center of utility meter 105. Accordingly, the computer 210, its memory, and the utility usage reading and payment module 205 are operable to: monitor and track utility usage; receive and process user instructions associated with bill payments; perform user authentications; communicate over one or more networks with the utility provider system 110; receive and display bill payment status; store bill payment history, utility usage history, user authentication data, payment data; and the like, as further described herein.

The utility meter 105 may further include one or more user input interfaces 215 and one or more displays 220. The one or more user input interfaces 215 may include, but are not limited to, a keypad, a touch screen, voice command, or any other suitable interface operable to receive and communicate user input to the computer 210. The one or more displays 220 may include, but are not limited to, screen displays, audible output devices (e.g., speaker, transducer, etc.), or any other suitable output means operable to present instructions and status information to a user. In addition, the utility meter 105 may also include one or more input/output ("I/O") ports 225 (e.g., serial ports, (e.g., RS233 port, USB, etc.) and one or more network interfaces 230. The I/O port or ports 225 may be operable to communicate with input/output devices, such as an internal and/or external display, keypad, mouse, pointing device, control panel, touch screen display, another computer-based device, printer, remote control, microphone, speaker, etc., which facilitate user interaction with the utility meter 105. For example, according to one embodiment, a user may issue input instructions (e.g., payment instructions, etc.) to the utility meter 105 by a computer system in communication with the utility meter 105, which may be in wired communication via an I/O port 225 or in wireless communication via a wireless communication port (e.g., supporting WiFi, WiMAX, Bluetooth, RFID, etc.). The one or more network interfaces 230 may facilitate connection of the utility meter 105 to one or more suitable networks, for example, the network(s) 120 illustrated in FIG. 1, and/or any other networks, such as, but not limited to, the Internet, wireless networks, local area networks, wide area networks, private networks, direct communication links, and the like. In addition, according to one embodiment, the utility meter 105 and a network interface 230 may be configured to communicate over a utility grid (or other utility infrastructure), such as, but not limited to, a smart grid (e.g., a utility network incorporating a communications network, such as TCP/IP communications, etc.), over power line communications ("PLC") systems, and the like.

It is appreciated that the utility meter 105 may be configured specifically for the customer 115 and the utility 125 at any point, such as prior to providing to the customer 115, upon or during installation at the customer's 115 site, or after installation. Configuration may be performed at the utility provider system 110 or may be performed over a network, which allows remote configuration and updating of the utility meter 105. As will be further apparent herein, configuration may include, but is not limited to, providing utility 125 service data, customer data (name, address, or other service identifier, etc.), utility provider system 110 data, utility cost data, bill payment data, customer authentication data, payment methods data, and the like, which will be stored in the memory of the utility meter 105 for subsequent retrieval and operations to be performed thereon.

According to various embodiments, as further described herein, the utility meter 105 may include numerous of features and/or components that allow beneficial interaction with the customer 115 as well as secure, efficient, and reliable payment of utility bills. For example, according to some embodiments, the utility meter 105 may include one or more user authentication aspects, which may include, but are not limited to: biometric authentication software and hardware (e.g., finger print reader, authentication logic, customer's biometric imprint, retinal scanner, voice collection transducer, voice authentication logic, etc.), one or more user identifiers (e.g., PIN, password, etc.) and corresponding user entry and detection logic, card swipe hardware and software, and the like. It is appreciated that the aforementioned user authentication techniques are provided as illustrative purposes, and that any suitable user authentication technique can be provided.

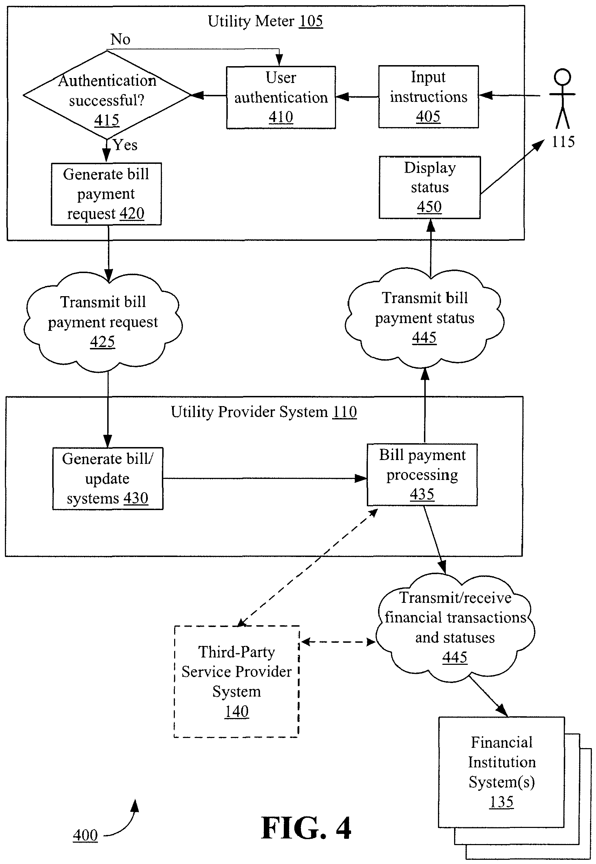

Other features of the utility meter 105 may include one or more beneficial data output and/or display 220 aspects, which may include, but are not limited to: display screen (e.g., liquid crystal display, etc.), audio output, one or more printing ports for printing to an external printing device, an internal or connected printer (e.g., thermal printer, etc.), and the like. Similarly, one or more user input devices 215 may be provided, such as, but not limited to: a keypad, a touch screen (which may be integrated with an output display 220), audio input, external device input (e.g., connecting an external computer to allow user input to the utility meter 15, etc.), and the like. According to aspects of the operations described herein, a customer 115 may interact with the utility meter 105 to: view current and/or past utility usage data; view current and/or past payment data; view payment status information; provide bill payment instructions; update customer information; update bill payment information; etc. Moreover, in one embodiment, the utility meter 105 may be configured with a simple input interface, such as a single button or other input device, operable to initiate bill payment which, when the button or other input device is selected, the utility meter 105 and the utility usage reading and payment module 205 initiate the bill payment process, as described in more detail herein, such as with reference to FIG. 4.

In addition, according to one embodiment, the utility meter 105 can be configured to communicate with the utility provider system 110 over a network 120 configured as a smart grid using one or more known automated meter reading ("AMR") protocol or advanced metering infrastructure ("AMI") protocol. Example protocol include, but are not limited to: an American National Standards Institute ("ANSI") C12 standard (e.g., ANSI C12.18 or ANSI C12.21, etc.); or a Device Language Metering Specification/Companion Specification for Energy Metering ("DLMS/COSEM") standard (e.g., International Electrotechnical Commission ("IEC") standards, such as IEC 62056, IEC 61107, etc.). A utility meter 105 and the utility usage reading and payment module 205 configured in this manner may thus communicate according to an AMR/AMI protocol such as over the utility grid (e.g., a smart grid) and/or over a separate network (e.g., the Internet or other public or private network). It is appreciated, however, that the utility meter 150 and the utility usage reading and payment module 205 are not limited to AMR/AMI protocol, and may generate and communicate messages according to any other suitable communications protocol.

With continued reference to FIG. 1, the network or networks 120 and network or networks 122 may be any communication networks, such as, but not limited to, the Internet, wireless networks, local area networks, wide area networks, private networks, and the like. According to one embodiment, the network 122 may represent one or more financial networks, such as, but not limited to, one operable to communicate debit and credit transactions and/or other payment processing and settlement messaging between the utility provider system 110 and one or more financial institution systems 135, such as may be utilized for automated clearing house ("ACH") transactions, automated teller machine ("ATM") networks, and/or other payment processor networks (e.g., processor networks provided by Visa International, MasterCard Worldwide, Discover Financial Services, American Express Company, etc.).

Due to network connectivity, various methodologies described herein may be practiced in the context of distributed computing environments. Although the system 100 is shown as including two networks 120, 122, it is to be understood that any other network configuration is possible, which may optionally include a plurality of networks, each with devices such as gateways and routers, for providing connectivity between or among networks.

The utility provider system 110 may likewise be one or more processor-driven devices, such as may include one or more microprocessors and memories or other computer-readable media operable for storing and executing computer-executable instructions. Example processor-driven devices may include, but are not limited to, a server computer, a mainframe computer, one or more networked computers, a desktop computer, a personal computer, an application-specific circuit, a microcontroller, a minicomputer, or any other processor-based device. The execution of suitable computer-implemented instructions by the utility provider system 110 may form a special purpose computer or other particular machine that is operable to facilitate the provision of utility services and bill payment from customers' utility meters 105. Although a single utility provider system 110 is described herein, the operations and/or control of the utility provider system 110 may be distributed among any number of computers and/or processing components. Moreover, in some instances, the operations described herein may be performed by multiple utility provider systems 110, or other associated systems, such as if different systems are responsible for carrying out different aspects of the bill payment processes described herein.

FIG. 3 illustrates one embodiment of an example computer system 300, which may make form at least a part of the utility provider system 110. It is appreciated that the computer system 300 described with reference to FIG. 3 may also represent the computer systems as may be utilized by the one or more financial institution systems 135 and/or the one or more third-party service provider systems 140. A computer 300 may include a memory 310 that stores programmed logic 320 (e.g., software), which may include the bill payment module 130, and may store data 330, such as data associated with processing bill payments, customer data, utility data, unit cost data, financial institution and/or financial network data, and the like. The memory 310 also may include an operating system 340. A processor 350 may utilize the operating system 340 to execute the programmed logic 320, and in doing so, also may utilize the data 430. A data bus 360 may provide communication between the memory 310 and the processor 350. Users may interface with the computer system 300 via at least one user interface device 370 such as a keyboard, mouse, control panel, or any other devices capable of communicating data to and from the computer system 300. The computer system 300 may be in communication with one or more other computer systems, via an I/O Interface 380, such as via one or more networks, such as the networks 120, 122 described with reference to FIG. 1. Additionally, it should be appreciated that other external devices, such as other utility provider systems, may be in communication with the computer system 300 via the I/O Interface 380. The computer system 300 and the programmed logic 320 implemented thereby may include software, hardware, firmware, or any combination thereof. It should also be appreciated that multiple computers 300 may be used together, whereby different features described herein may be executed on one or more different computers 300.

With continued reference to FIG. 1, the utility provider system 110 may be in communication with one or more financial institution systems 135 over one or more networks 122, such as any of the financial networks described herein. The utility provider system 110 may communicate with the financial institution systems 135 to facilitate utility bill payment, such as to perform credit or other payment instrument authorization transactions, perform credit transactions with one or more financial accounts at a financial institution associated with the utility provider, perform debit transactions with one or more financial accounts at a financial institution associated with customers (e.g., as indicated on the bill payment requests from the utility meters 105, etc.), receive status messages, and the like. While the methods described herein generally describe the utility provider system 110 as performing the utility payment processing with the financial institutions, it is appreciated that one or more third-party service provider systems 140, such as third-party bill payment processors, may instead, or additionally, be utilized such that the utility provider system 110 communicates bill payment instructions (e.g., including payment amount, payment account, payment data, utility account, etc.) to a third-party service provider system 140, which then processes the payment with the one or more financial institution systems 135, as conventionally performed.

Those of ordinary skill in the art will appreciate that the system 100 shown in and described with reference to FIG. 1 is provided by way of example only. Numerous other operating environments, system architectures, and device configurations are possible. Other system embodiments can include fewer or greater numbers of components and may incorporate some or all of the functionality described with respect to the system components shown in FIG. 1. Accordingly, embodiments of the invention should not be construed as being limited to any particular operating environment, system architecture, or device configuration.

FIG. 4 illustrates a flowchart representing an example method for paying a utility bill, according to an embodiment of the invention. The method 400 may be performed, in part, by a utility meter, a utility provider system, and financial institution systems, such as the utility meter 105 and associated utility usage reading and payment module 205, the utility provider system 110 and associated bill payment module 130, and the financial institution systems 135 described with reference to FIG. 1. Accordingly, at least a portion of the method 400 may be performed by a customer using a utility meter 105 at the customer's 115 site, such as requesting utility bill payment, while a portion of the method 400 can be performed by a corresponding utility provider system 110, such as processing the received utility bill payment request. As described with reference to FIGS. 1-2, the utility meter 105 may be operable to track and store utility usage data, and to initiate bill payment processing by storing usage data, payment data, authentication data, and performing operations thereon, such as receiving a customer's request to initiate payment, authorizing the customer, and generating and transmitting a utility bill payment request. Likewise, the utility provider system 110 may, in addition to facilitate the provision of the utility services, process bill payment requests from the utility meter 105 and process corresponding financial transactions with the associated customer's 115 and utility provider's financial institutions 135.

The method 400 may begin at block 405, in which a customer 115 initiates a bill payment request by issuing utility bill payment instructions to the utility meter 105, such as via a user input interface. According to one embodiment, the user input interface may be a simple button or other interface for selection by the customer 115, such that the customer need only depress or otherwise engage the input interface a single time to automatically initiate the bill payment request processing by the utility meter 105. In another embodiment, however, the input interface may include a more complex interface having multiple buttons or other means for selecting and/or entering input instructions. For example, the utility meter 105 may optionally include a display and generate menu-driven instructions to facilitate the bill payment processing, stepping the customer 115 through each of the operations and allowing for corresponding selection or input to the utility meter's 105 input interface at block 404 by the customer.

According to another example embodiment, a user may issue utility bill payment instructions to the utility meter 105 by a computer system in communication with the utility meter 105, such as in wired communication (e.g., RS233 port, USB, etc.) or in wireless communication (e.g., WiFi, WiMAX, Bluetooth, RFID, etc.). In this embodiment, the computer system may provide an input interface and display for receiving instructions and presenting meter and status information, which may be a locally executed application, or may be a web-based application (or other server-based application), or a combination thereof. Accordingly, a computer system may optionally serve to provide a user interface to the utility meter, to present information and issue a user's instructions thereto.

It is appreciated that, as part of the bill payment initiation operations at block 405, the customer 115 may perform one or more of the following: request to view current utility usage data; request to view past utility usage data; request to view cost data; request to view payment data (e.g., payment instrument type, financial account number, etc.); request to view past payment data; input or edit payment data (e.g., payment instrument type, financial account number, payment amount, pay date, etc.); enter an issued bill or invoice utilized to generate a bill payment request message (e.g., by invoice number, by account number, by amount due, by date, etc.); enter authentication data (e.g., entering fingerprint or other biometric sample, entering personal identification number or code, password, etc.); edit authentication data (e.g., store biometric samples, change personal identification number or codes, passwords, etc.); and the like. Accordingly, the utility meter 105 is operable to store, retrieve, and perform operations on any one or more of the aforementioned types of data and corresponding information. In some embodiments, some or all of the aforementioned data is stored in local memory of the utility meter 105. However, in other embodiments, it is appreciated that the utility meter 105 may retrieve some or all of this information over a network from a remote location, such as from the utility provider system 110 or other remote storage device operable for storing and maintaining data.

Following block 405 is block 410, in which the utility meter 105 performs authentication of the customer 115. Authentication may be performed according to number authentication techniques, such as, but not limited to: authenticating the customer's 115 biometric sample based on an authorized stored biometric sample (e.g., fingerprint and authentication algorithm, voice verification and authentication algorithm, retinal scan and authentication algorithm, etc.), or authenticating a personal identification number or code or password (e.g., multiple digit alpha-numeric combination, etc.). It is appreciated that any suitable authentication technique may be utilized, according to various embodiments, which may be performed based on locally stored authentication data and/or based on remotely stored data accessed over a network.

It is further appreciated that, in some embodiments, the authentication operations at block 410 may be combined with, or the same as, any authentication performed in association with processing the payment instrument. For example, in one embodiment, only a single authentication operation may be performed, which is the authentication associated with authorizing the use of the payment instrument and not separately authenticating the user. Specific details regarding payment instrument authentication may depend upon the payment instrument and/or issuing financial institution utilized. According to one embodiment, the utility meter 105 may receive from the customer 115 the customer's authentication data (e.g., personal identification number or code, password, etc.) and transmit it with the bill payment request (e.g., at blocks 420-425) for authentication by one or more of the utility provider system 110, the corresponding financial institution system 135, or even with the use of a third-party service provider system 140.

At decision block 415, it is determined whether the authentication information gathered at block 410 is properly authenticated. If authentic, then operations continue to block 420. If the authentication is not successful, then operations can repeat back to block 410, such as to re-request authentication information from the customer. In other embodiments, however, the operations may end after an unsuccessful authentication, in which the customer 115 may have to reinitiate the method 400 at block 405.

After successful authentication, block 420 follows, in which the utility meter 105 may begin assembling a utility bill payment request message for transmitting to the utility provider system 110. According to various embodiments, data included in the utility bill payment request message may be entered by the customer, retrieved from local memory of the utility meter 105, and/or retrieved remotely (e.g., over a network, etc.). The contents of the utility bill payment request message may vary, according to different embodiments. For example, a utility bill payment request may include, but is not limited to, any one or more of the following data: customer information (e.g., name, address, etc.); a utility usage reading; a utility account identifier; utility unit cost data (for which stored values may be updated over a network, such as from the utility provider system 110); a financial institution identifier (e.g., a Bank Identifier Number, Routing Transit Number, etc.); a financial account number (e.g., credit, debit, checking accounts, etc.); a payment amount (e.g., as calculated based on the utility usage reading, etc.); a payment date (e.g., present date, future date, etc.); a unique identifier (e.g., personal identification number or code, password, etc.); and the like.

In one embodiment, at least a portion of the aforementioned data may be retrieved from memory by the utility provider system 110 based on an association with the utility bill payment request received from the utility meter 105. For example, in one embodiment, the customer 115 may have already received a bill or invoice from the utility provider that indicates a utility account, amount due, due date, utility usage, etc. The customer 115 may simply enter a unique identifier associated with the received bill or invoice into the utility meter 105, which will be included with the utility bill payment request message, allowing the utility provider system 110 to access the corresponding information its accounting and billing systems.

According to one embodiment, the utility bill payment request message may be formatted according to the utility provider's requirements, such as if the utility provider system 110 and its corresponding bill payment module 130 will regenerate and format financial transaction messages according to the financial institution systems' 135 standards and/or the financial networks' 122 standards. In another embodiment, however, the utility meter 105 may be operable to generate and format the utility bill payment message as one or more transactions according to the financial institution systems' 135 standards and/or the financial networks' 122 standards, such that the utility provider system 110 may not be required to reformat the entire message.

It is further appreciated that, in some embodiments, multiple messages may be generated as a result of a single bill payment request initiated by the customer 115 at block 405. For example, in one embodiment, a separate authorization message or messages may be transmitted from the utility meter 105 to the utility provider system 110 prior to generating the final utility bill payment request message or messages, such as to authorize the customer 115 and/or to authorize payment account information. In another embodiment, the utility bill payment request message may consist of at least two messages to complete the respective credit to the utility provider's financial account and a debit (or charge, such as if a credit card is charged for inclusion on a subsequent invoice) to the customer's financial account. It is appreciated that the actual structure and content of the utility bill payment request message or messages may differ by implementation, and that the aforementioned examples are provided for illustrative purposes and are not limiting.

Following block 420 is block 425, in which the utility bill payment request message is transmitted over a network from the utility meter 105 to the utility provider system 110 for completing the bill payment processing. As described herein, the network may be any network over which the utility meter 105 and the utility provider system 110 are operable to communicate. For example, in one embodiment, the utility meter 105 may be a smart meter configured for communication over a smart grid network, such as using AMR/AMI messaging protocol. A smart grid network may be provided according to any of numerous suitable network configurations. In another embodiment, the utility meter 105 may be a smart meter configured for communicating over a different communications network, such as the Internet or any other public or private network, which may be wired or wireless networks.

According to one embodiment, the utility meter 105 may display information associated with the utility bill payment request for the customer's final approval prior to completing the bill payment. Final approval may be obtained prior to transmitting the initial utility bill payment request at block 425, or at some point after transmitting the utility bill payment request. For example, bill payment information may be displayed to the customer 115 by the utility meter 105 after the initial bill payment request message transmission when the utility provider system 110 generates final bill details (e.g., such as if the utility provider system determines the final payment amount, etc.) upon receiving the initial payment request at block 425.

At block 430, the utility provider system 110 receives the utility bill payment request message and, in some embodiments, generates (or retrieves) the bill to be paid. Even though the utility meter 105 is transmitting payment instructions, the utility provider system 110 may optionally generate a bill upon receipt of the utility bill payment request, which will serve to generate corresponding records in the accounting and billing systems of the utility provider. In some embodiments, at block 430, the utility provider system 110 may access a previously-generated bill or invoice, such as if one has already been generated and the utility bill payment request message is in response to a received bill or invoice.

Following block 430 is block 435, in which the utility provider system 110 generates all corresponding financial transaction messages for transmission to the financial institution systems 135, such as may be performed in part by the bill payment module 130 of the utility provider system 110. Financial transaction messages may include a debit transaction message to debit the financial account of the customer 115, as indicated by the payment data associated with the utility bill payment request, and a credit transaction message to credit the financial account of the utility provider. It is appreciated that the financial transaction messages may be generated according to numerous message protocol and standards, which may be provided according to the financial institution standards, the financial network standards, or a third-party service provider standards (e.g., if a third-party service provider system 140 is utilized to facilitate processing the bill payment transactions).

Thus, in one embodiment, some or all of the processing associated with generating the respective financial transactions corresponding with the customer's 115 bill payment request may be performed, at least in part, by a third-party service provider system 140. For example, according to one embodiment, the utility provider system 110 may transmit payment data (e.g., customer's financial institution and financial account, utility provider's financial institution and financial account, payment amount, payment date, etc.) over a network to the third-party service provider system 140 for generating and transmitting the corresponding financial transactions.

At block 440, the utility provider system 110 (or the third-party service provider system 140, in some embodiments, as described) may transmit one or more messages corresponding to the financial transactions to effect bill payment. The financial transaction messages may be transmitted over a financial network, such as any of the financial networks 122 described with reference to FIG. 1, in real-time or near real-time, or in batch mode. Batch mode transmission may allow combining credit transactions to the same financial institution and debit transactions to the same financial institution, for which settlement or reconciliation information is provided to allow the individual credits and debits to be subsequently performed by the respective financial institution systems.

As part of block 440, one or more status messages may be returned over the financial network to the utility provider system 110. Status messages may be utilized to update internal utility accounts, such as providing posting information to show the status of payments to individual customers' accounts and to update the billing and accounting systems.

Status messages from the financial institution systems 135 may also be utilized to generate one or more status update messages for transmission at block 445 over a network to the customer 115. According to one embodiment, as shown, the status messages may be transmitted directly to the utility meter 105 over the same network that the utility bill payment request messages are transmitted, allowing display of the status (e.g., success, paid, error, denied, paid amount, balance due, etc.) on a display (or for printing) of the utility meter 105 at block 450. Information associated with the status messages may be stored in memory of the utility meter 105, which may be utilized to generate payment history and to allow the customer 115 to retrieve payment history data (e.g., for viewing or for printing, etc.). According to another embodiment, the status messages may be made available to the customer 115 over a network from a device other than the utility meter 105, such as using a computer accessing a utilities and/or bill payment web page (e.g., over the Internet or other public or private network, etc.).

Accordingly, the method 400 may end after block 450, having allowed a customer to initiate a bill payment request directly from a utility meter 105, which can be transmitted over a network for processing by the utility provider system 110 (and/or by a third-party service provider).

It is appreciated that many variations exist for the method 400, and that the foregoing examples are provided for illustrative purposes and are not limiting. As an one example, the utility meter 105 may be a prepaid utility meter which maintains (and optionally displays) the number of utility credits remaining, and for which the utility bill payment request may serve to prepay additional utility credits. In this embodiment, one display of the utility meter 105 (e.g., after the status messages is transmitted at block 450) may indicate a balance of available credits after a payment, or a balance owed for outstanding unpaid energy which has already been used (e.g., according to the equation of: balance utility payable = accumulated utility - paid utility, etc.). As another example, the utility meter may be configured to receive from the customer a number of utility units for which a payment is to be made, rather than a payment amount or a specific invoice. Likewise, in one example, a utility bill payment request generated by the utility meter for transmission to a utility service provider system may include the number of units for which payment is to be made instead of a payment amount or a specific invoice. Upon receipt of a bill payment request identifying a number of utility units, the utility service provider system may calculate the payment amount based on the unit cost for the utility at that time.

Accordingly, embodiments of the systems and method described herein provide a technical effect of enabling initiation of a utility bill payment directly from a utility meter. Various additional technical effects achieved include simplified bill payment processing, reduced bill generation costs, reduced utility usage collection costs, reduced environmental impact as a result of reduced paper billing, reduced collection labor costs, more accurate bill payments, and increased on-time bill payments. Further technical effects associated with the utility meters operably configured as described herein provide secure user authentication prior to initiating a bill payment, user review of utility usage and bill payment data directly from the utility meter, a simple user interface and display, and an ability to print and/or store utility usage data and bill payment data from the utility meter.

References are made to block diagrams of systems, methods, apparatuses, and computer program products according to example embodiments of the invention. It will be understood that at least some of the blocks of the block diagrams, and combinations of blocks in the block diagrams, respectively, may be implemented at least partially by computer program instructions. These computer program instructions may be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the block or blocks.

One or more components of the systems and one or more elements of the methods described herein may be implemented through an application program running on an operating system of a computer. They also may be practiced with other computer system configurations, including hand-held devices, multiprocessor systems, microprocessor based, or programmable consumer electronics, mini-computers, mainframe computers, etc.

Application programs that are components of the systems and methods described herein may include routines, programs, components, data structures, etc. that implement certain abstract data types and perform certain tasks or actions. In a distributed computing environment, the application program (in whole or in part) may be located in local memory, or in other storage. In addition, or in the alternative, the application program (in whole or in part) may be located in remote memory or in storage to allow for circumstances where tasks are performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated the invention may be embodied in many forms and should not be limited to the example embodiments described above. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A utility meter (105) for paying a utility bill, comprising:
a utility usage reading and payment module (205);
memory (310) operable to store payment information, user authentication information, and computer-executable instructions; and
a processor (350) in communication with the utility usage reading and payment module (205), the memory (310), and a communications network, wherein the processor (350) is operable to:
measure utility usage;
output data (330) associated with the utility usage;
receive user instructions to issue utility bill payment instructions associated with the measured utility usage over the communications network;
authenticate the user according to the user authentication information; and
transmit the utility bill payment instructions and the payment information over the communications network for processing.

2. The utility meter (105) of claim 1, wherein the utility meter (105) further comprises a user input interface (215) comprising a biometric authentication device for authenticating the user according to the user authentication information.

3. The utility meter (105) of claim 1, wherein utility meter (105) further comprises a user input interface (215) comprising a keypad for receiving the user instructions.

4. The utility meter (105) of claim 3, wherein, when authenticating the user, the processor (350) is further operable to receive a personal identification code via the keypad for authenticating the user according to the user authentication information.

5. The utility meter (105) of claim 3, wherein the processor (350) is further operable to receive via the keypad payment data (330) comprising at least one of: (a) utility units or (b) a payment amount, for including with the utility bill payment instructions.

6. The utility meter (105) of claim 1, wherein utility meter (105) is in communication with a computer system (300) for receiving the user instructions from the computer system (300).

7. The utility meter (105) of claim 1, wherein the data (330) associated with the utility usage comprises at least one of: (a) units of utility usage of a period of time; (b) cost of utility usage over the period of time; or (c) a unit cost of the utility.

8. The utility meter (105) of claim 6, wherein the processor (350) is further operable to receive updated unit cost of utility data over the communications network.

9. The utility meter (105) of claim 1, wherein the processor (350) is further operable to:
output data (330) associated with the utility usage subsequent to receiving the user instructions to issue the utility bill payment instructions; and
receive confirmation to proceed to issue the utility bill payment instructions from the user prior to issuing the utility bill payment instructions.

10. The utility meter (105) of claim 1, wherein the processor (350) is further operable to receive a utility bill payment status update over the communications network upon processing the utility bill payment instructions by issuing respective debit and credit instructions over a payment network and posting a payment amount to the a utility account identified by the utility bill payment instructions.

11. The utility meter of claim 9, wherein the processor (350) is further operable to perform at least one of: (a) output information associated with the utility bill payment status update on a display associated with the meter (105); (b) store the utility bill payment status update in the memory (310); or (c) store information associated with the utility bill payment instructions in the memory (310).

12. The utility meter of claim 1, wherein the utility bill payment instructions are generated according to at least one of: (a) an Automated Meter Reading (AMR) communications standard; (b) an Advanced Metering Infrastructure (AMI) communications standard; (c) an American National Standards Institute (ANSI) C12 standard; or (d) a Device Language Metering Specification/Companion Specification for Energy Metering (DLMS/COSEM) standard.

13. The utility meter of claim 1, further comprising an output port operable for connecting to at least one of: (a) a printing device or (b) an external memory, wherein the processor (350) is operable to facilitate printing or storage of data associated with utility usage or with utility bill payment.
